(19) Europäisches Patentamt
European Patent Office
Office européen des brevets

(11) Veröffentlichungsnummer: **0 433 813 A2**

# (12) EUROPÄISCHE PATENTANMELDUNG

(21) Anmeldenummer: **90123619.0**

(22) Anmeldetag: **08.12.90**

(51) Int. Cl.5: **C09B 11/16**, B41M 5/20, B41M 5/136, B41M 5/30

(30) Priorität: **21.12.89 DE 3942227**

(43) Veröffentlichungstag der Anmeldung: **26.06.91 Patentblatt 91/26**

(84) Benannte Vertragsstaaten: **CH DE FR GB LI**

(71) Anmelder: **BAYER AG**

**W-5090 Leverkusen 1 Bayerwerk(DE)**

(72) Erfinder: **Eckstein, Udo, Dr.**
**Wolfskaul 8**
**W-5000 Köln 80(DE)**
Erfinder: **Raue, Roderich, Dr.**
**Berta-von-Suttner-Strasse 48**
**W-5090 Leverkusen(DE)**

(54) **Triarylmethan-Farbbildner.**

(57) Farbbildner der allgemeinen Formel

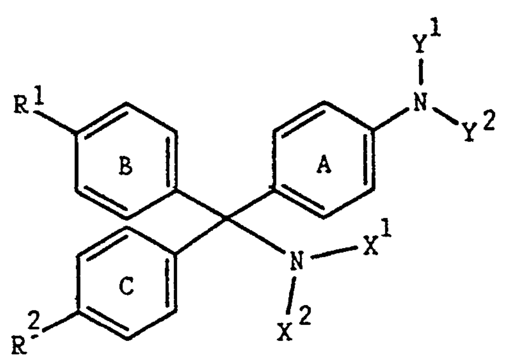

(I),

worin - unabhängig voneinander -

- $R^1$ und $R^2$ Wasserstoff, Halogen, Alkyl, Aralkyl u. a.,
- $Y^1$ und $Y^2$ Alkyl, Aryl, Cycloalkyl oder-Aralkyl,
- $X^1$ Alkyl, Alkenyl, Cycloalkyl, Aralkyl u. a.,
- $X^2$ H, Alkyl, Alkenyl, Cycloalkyl u.a.
- $X^1$ mit $X^2$ unter Einschluß des sie tragenden Stickstoffatoms einen gesättigten bzw. ungesättigten 5- bzw. 6-gliedrigen heterocyclischen Ring bilden können, und

den Ringen A, B und C weitere isocyclische oder heterocyclische Ringe anelliert werden können, zeigen, in Aufzeichnungsmaterialien auf Basis saurer Entwickler eingearbeitet, ein besonders vorteilhaftes Migrationsverhalten. Man erhält intensive blaue, grünblaue, grüne; violette oder rote Farbtöne, die ausgezeichnet sublimations- und lichtecht sind.

EP 0 433 813 A2

## TRIARYLMETHAN-FARBBILDNER

Gegenstand der Erfindung sind Farbbildner der allgemeinen Formel

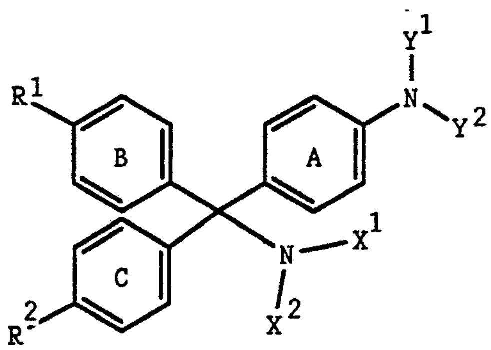

(I),

worin - unabhängig voneinander -

$R^1$ und $R^2$ Wasserstoff, Halogen, Alkyl, Aralkyl, Alkoxy, Aralkoxy, Aryloxy, oder einen Rest der Formel

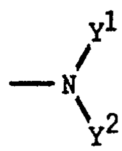

$Y^1$ und $Y^2$ Alkyl, Aryl, Cycloalkyl oder Aralkyl,

$x^1$ Alkyl, Alkenyl, cycloalkyl, Aralkyl, Aryl, Acyl, Arylcarbonyl, Arylsulfonyl, Carbamoyl, N-Alkylcarbamoyl, N,N-Dialkylcarbamoyl, N-Arylcarbamoyl, N-Alkyl-N-arylcarbamoyl, Sulfamoyl, N-Alkylsulfamoyl, N,H-Dialkylsulfamoyl, N- Arylsulfamoyl oder N-Alkyl-H-arylsulfamoyl,

$x^2$ Wasserstoff, Alkyl, Alkenyl, Cycloalkyl, Aralkyl oder Aryl bedeuten, oder

$X^1$ mit $X^2$ unter Einschluß des sie tragenden Stickstoffatoms einen gesättigten bzw. ungesättigten 5- bzw. 6-gliedrigen heterocyclischen Ring bilden können, und

den Ringen A, B und C weitere isocyclische oder heterooyolische Ringe anelliert werden können, und die cyclischen und acyclischen Reste sowie die Ringe A, B und C weitere in der Farbstoffchemie übliche, nichtionische Substituenten tragen können, oder deren Gemische, ihre Herstellung und ihre Verwendung zur Herstellung von druckempfindlichen und thermoreaktiven Aufzeichnungsmaterialien und die Herstellung ihrer hochkonzentrierten Lösungen in organischen Lösungsmitteln aus der Gruppe der gegebenenfalls chlorierten Kohlenwasserstoffe, der pflanzlichen Öle oder der Phthalsäureester sowie die Verwendung dieser Lösungen zur Herstellung von druckempfindlichen Aufzeichnungsmaterialien.

In der Farbstoffchemie übliche, nichtionische Substituenten sind z.B. Halogen, Hydroxy, Alkoxy, Alkenyloxy, Aryloxy, Aralkoxy, Cycloalkyloxy, Alkylcarbonyloxy, Arylcarbonyloxy, Aryl, Alkylmercapto, Arylmercapto, Aralkylmercapto, Alkylsulfonyl, Cyan, Carbamoyl, Alkoxycarbonyl, Amino, das durch 1 oder 2 Alkyl-, Cycloalkyl-, Aryl- oder Aralkylgruppen substituiert sein kann, oder dessen Substituenten ringgeschlossen sein können, bevorzugt zu einem 5- oder 6-gliedrigen Ring, Acylamino, und als Substituenten der Ringe außerdem Alkyl, Aryl, Aralkyl, Alkenyl oder Arylvinyl.

Alkyl steht für $C_1$-$C_{30}$-Alkyl, insbesondere für $C_1$-$C_{12}$-Alkyl.

Die Alkylreste und die Alkylreste in Alkoxy-, Alkylthio-, Alkylamino-, Alkanoylamino-, Alkylsulfonyl- und Alkoxycarbonyl-gruppen können verzweigt und beispielsweise durch Fluor, Chlor, $C_1$-$C_4$-Alkoxy, Cyano oder $C_1$-$C_4$-Alkoxycarbonyl substituiert sein.

Aralkyl ist insbesondere Phenyl-$C_1$-$C_4$-Alkyl, das im Phenylkern durch Halogen, $C_1$-$C_4$-Alkyl und/oder $C_1$-$C_4$-Alkoxy substituiert sein Kann.

Cycloalkyl ist insbesondere gegebenfalls durch Methyl substituiertes Cyclopentyl oder Cyclohexyl.

Alkenyl ist insbesondere $C_2$-$C_5$-Alkenyl, das durch Hydroxy, $C_1$-$C_4$-Alkoxycarbonyl, Chlor oder Brom monosubstituiert sein kann. Bevorzugt sind Vinyl und Allyl.

Halogen ist insbesondere Fluor, Chlor und Brom, vorzugsweise Chlor.

Aryl ist insbesondere gegebenenfalls durch ein bis drei $C_1$-$C_4$-Alkyl, Chlor, Brom, Cyan, $C_1$-$C_4$-Alkoxycarbonyl oder $C_1$-$C_4$-Alkoxy substituiertes Phenyl oder Naphthyl.

Alkoxy ist insbesondere gegebenenfalls durch Chlor oder $C_1$-$C_4$-Alkoxy substituiertes $C_1$-$C_{12}$-Alkoxy.

Acyl ist insbesondere $C_1$-$C_4$-Alkylcarbonyl, $C_1$-$C_4$-Alkylsulfonyl, $C_1$-$C_4$-Alkoxycarbonyl und $C_1$-$C_4$-Alkoxysulfonyl.

Alkoxycarbonyl ist insbesondere gegebenenfalls durch Hydroxy, Halogen oder Cyan substituiertes $C_1$-$C_4$-Alkoxycarbonyl.

Die Ringe können durch nichtionische Substituenten, insbesondere durch $C_1$-$C_4$-Alkyl, $C_1$-$C_4$-Alkoxy, Cyan, Nitro oder Halogen substituiert sein.

Von den Farbbildnern der Formel (I) haben die Farbbildner der Formel

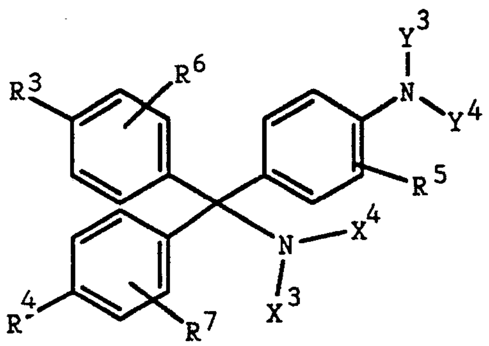

(II),

besondere Bedeutung, worin - unabhängig voneinander -

$R^3$ und $R^4$ Wasserstoff, Chlor, ggf. durch Chlor oder $C_1$-$C_4$-Alkoxy substituiertes $C_1$-$C_{12}$-Alkyl, ggf. durch Chlor oder $C_1$-$C_4$-Alkoxy substituiertes $C_1$-$C_{12}$-Alkoxy, Benzyl, Phenoxy oder einen Rest der Formel

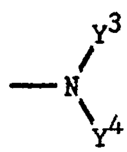

$R^5$, $R^6$, $R^7$ Wasserstoff, Chlor, $C_1$-$C_{12}$-Alkyl, $C_1$-$C_{12}$-Alkoxy, Phenoxy, Benzyloxy oder einen Rest der Formel

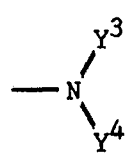

$Y^3$ und $Y^4$ ggf. durch Chlor, Cyano, $C_1$-$C_4$-Alkoxycarbonyl oder $C_1$-$C_4$-Alkoxy substituiertes $C_1$-$C_{12}$-Alkyl, Cyclohexyl, Phenyl oder Benzyl, die durch Chlor, $C_1$-$C_{12}$-Alkyl oder $C_1$-$C_{12}$-Alkoxy substituiert sein können,

$x^3$ $C_1$-$C_{12}$-Alkyl, cyclohexyl, ggf. durch Chlor, $C_1$-$C_4$-Alkyl oder $C_1$-$C_4$-Alkoxy substituiertes Benzyl oder Phenyl, $C_1$-$C_4$-Alkylcarbonyl, $C_1$-$C_4$-Alkylsulfonyl, $C_1$-$C_4$-Alkoxycarbonyl, ggf. durch Chlor, $C_1$-$C_4$-Alkyl oder $C_1$-$C_4$-Alkoxy substituiertes Phenylcarbonyl oder Phenylsulfonyl, Carbamoyl, N-$C_1$-$C_4$-Alkylcarbamoyl, N,N-Di-$C_1$-$C_4$-Alkylcarbamoyl, ggf. durch Chlor, $C_1$-$C_4$-Alkyl oder $C_1$-$C_4$-Alkoxy substituiertes N-Phenylcarbamoyl oder N-$C_1$-$C_4$-Alkyl-N-phenyl-carbamoyl, Sulfamoyl, N-$C_1$-$C_4$-Alkylsulfamoyl, N,N-Di-$C_1$-$C_4$-alkyl-sulfamoyl oder ggf. durch Chlor, $C_1$-$C_4$-Alkyl oder $C_1$-$C_4$-Alkoxy substituiertes N-Phenylsulfamoyl,

$X^4$ Wasserstoff bedeuten, oder

$X^3$ mit $X^4$ unter Einschluß des sie tragenden Stickstoffatoms einen heterocyclischen Ring der folgenden Formeln

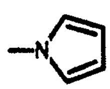 , 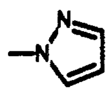 , 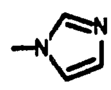 , 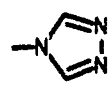 , 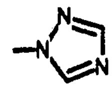 ,

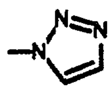 , 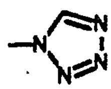 , 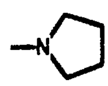 , 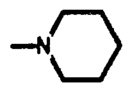 , 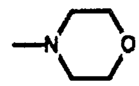

bilden können, wobei der heterocyclische Ringteil 1 bis 3 Reste aus der Gruppe Chlor, $C_1$-$C_4$-Alkyl oder Phenyl tragen kann, und

$R^3$ mit $R^6$, $R^4$ mit $R^7$ unter Einschluß des sie tragenden Benzolringes ein Ringsystem der Formeln

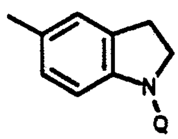 , 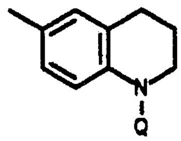 , 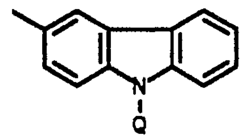

oder

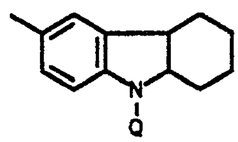

bilden können, wobei

Q für $C_1$-$C_{12}$-Alkyl, das durch Chlor, Cyano, $C_1$-$C_4$-Alkoxycarbonyl oder $C_1$-$C_4$-Alkoxy substituiert sein kann, Cyclohexyl, Phenyl oder Benzyl, die durch Chlor, $C_1$-$C_{12}$-Alkyl oder $C_1$-$C_{12}$-Alkoxy substituiert sein können, steht,

und der gesättigte Ringteil bis zu vier Reste aus der Gruppe Chlor, $C_1$-$C_4$-Alkyl, $C_1$-$C_4$-Alkoxy oder Phenyl tragen kann, oder

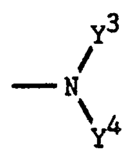

einen gegebenenfalls durch Chlor, $C_1$-$C_4$-Alkyl oder Phenyl substituierten Pyrrolo-, Pyrrolidino-, Piperidino-, Pipecolino-, Morpholino-, Pyrazolo- oder Pyrazolinrest bedeutet.

Beispiele für im gesättigten Ring substituierten Reste sind:

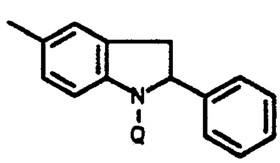 , 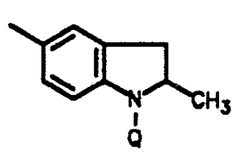 , 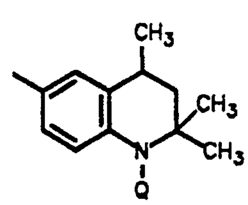 ,

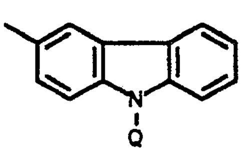 und 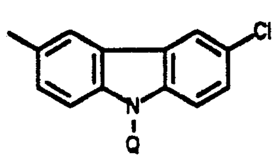

Besonders bevorzugt werden die Farbbildner der Formel

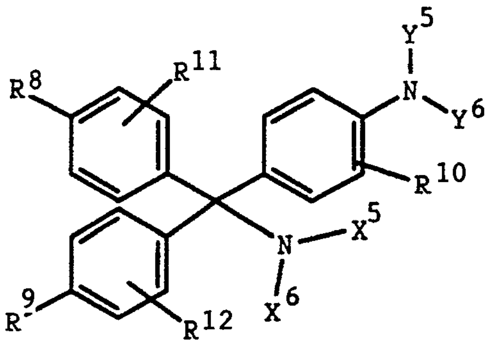

(III),

worin - unabhängig voneinander -

$R^8$ und $R^9$ Wasserstoff, Chlor, $C_1$-$C_{12}$-Alkyl, $C_1$-$C_{12}$-Alkoxy, Phenoxy oder einen Rest der Formel

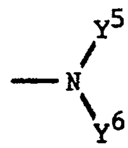

$R^{10}$,$R^{11}$,$R^{12}$ Wasserstoff, Chlor, Methyl, Ethyl, Propyl, Butyl, Methoxy, Ethoxy, Dimethylamino oder Diethylamino

$Y^5$ und $Y^6$ ggf. durch Chlor, Cyano, oder $C_1$-$C_4$-Alkoxy substituiertes $C_1$-$C_4$-Alkyl, Phenyl oder Benzyl,

$X^5$ Cyclohexyl, ggf. durch Chlor, Methyl, Ethyl, Methoxy oder Ethoxy substituiertes Phenyl, $C_1$-$C_4$-Alkoxycarbonyl, ggf. durch Chlor, Methyl, Ethyl, Methoxy oder Ethoxy substituiertes Phenylcarbonyl, Carbamoyl, N-$C_1$-$C_4$-Alkylcarbamoyl, N,N-Di-$C_1$-$C_4$-alkylcarbamoyl, ggf. durch Chlor, Methyl, Ethyl, Methoxy oder Ethoxy substituiertes N-Phenylcarbamoyl oder N-$C_1$-$C_4$-Alkyl-N-phenylcarbamoyl,

$X^6$ Wasserstoff bedeuten, oder

$X^5$ mit $X^6$ unter Einschluß des sie tragenden Stickstoffatoms einen heterocyclischen Ring der

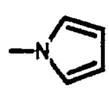 , 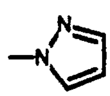 , 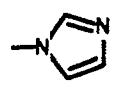 , 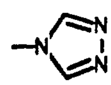 ,

Formeln

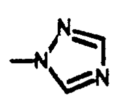

bilden können.

$R^8$ mit $R^{11}$, $R^9$ mit $R^{12}$ unter Einschluß des sie tragenden Benzolringes ein Ringsystem der Formeln

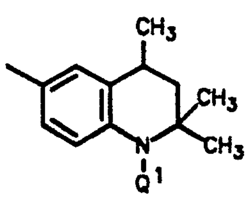 , 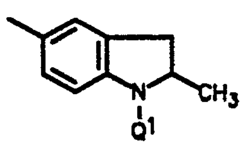 , 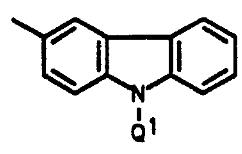

bilden können, und

$Q^1$ für $C_1$-$C_{12}$-Alkyl steht.

Die Farbbildner der Formel (I) können nach an sich bekannten Verfahren hergestellt werden. Ein

Verfahren besteht z.B. darin, daß man Farbstoffsalze der Formel

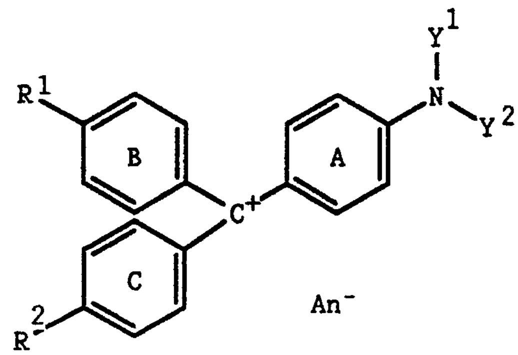

(IV),

worin
$R^1$, $R^2$, $Y^1$, $Y^2$ und die Ringe A, B und C die oben genannte Bedeutung haben und
$An^-$ für ein Anion aus der Reihe Chlorid, Bromid, Acetat, Sulfat, Phosphat oder p-Toluolsulfonat steht,
mit den Basen der Formel MeOH (V), worin
Me ein Alkali- oder Erdalkalimetall, insbesondere Natrium oder Kalium bedeutet,
in einem für die Reaktion geeigneten, organischen Lösungsmittel zu den Carbinolbasen der Formel

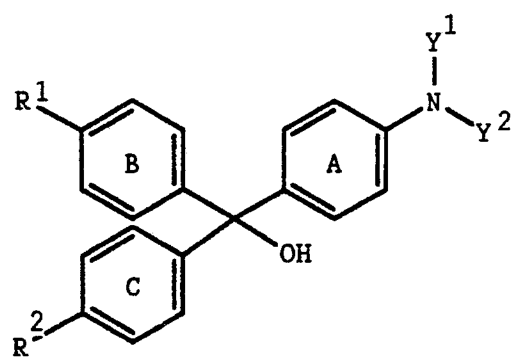

(VI)

umsetzt. Die organische Phase wird dann gegebenenfalls abgetrennt und die Carbinolbasen der Formel (VI) ohne Zwischenisolierung mit den Verbindungen der Formel

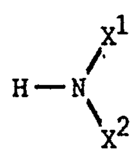

(VII),

worin
$X^1$ und $X^2$ die oben genannte Bedeutung haben,
unter Entfernung des Reaktionswassers kondensiert.

Anschließend werden evtl. nach Entfernen des Lösungsmittels die Verbindungen der Formel (I) isoliert.

Geeignete Reaktionsmedien sind aromatische Kohlenwasserstoffe wie Toluol, Xylol, Chlorbenzol, 1,2-Dichlorbenzol oder auch Chlortoluole sowie polare Lösungsmittel wie Dimethylformamid, Dimethylsulfoxid, Hexamethylphosphorsäuretriamid und Alkanole. Bevorzugt sind aromatische Kohlenwasserstoffe und Dimethylformamid.

Geeignete Reaktionstemperaturen liegen zwischen 20 und 120 °C, bevorzugt sind 30 bis 80 °C.

Ein besonders vorteilhaftes Herstellungsverfahren besteht darin, daß man in einer Eintopfreaktion Ketone der Formel

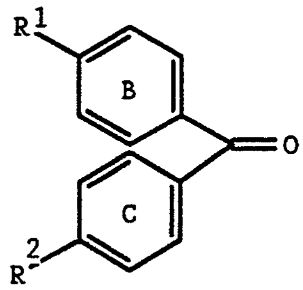

(VIII),

worin
$R^1$, $R^2$, B und C die oben genannte Bedeutung haben,
mit Aminen der Formel

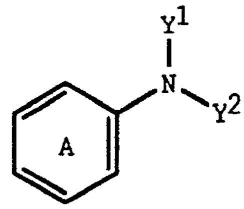

(IX),

worin
$Y^1$, $Y^2$ und A die oben genannte Bedeutung haben,
oder Ketone der Formel

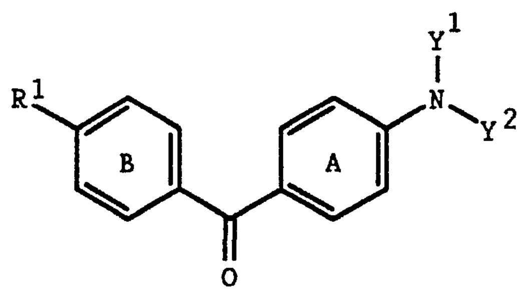

(X),

worin
$R^1$, $Y^1$, $Y^2$, A und B die oben genannte Bedeutung haben,
mit Verbindungen der Formel

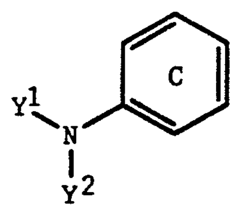

(XI),

worin
$Y^1$, $Y^2$ und C die oben genannte Bedeutung haben,
in Gegenwart eines Kondensationsmittels, das ein Anion $An^-$ liefert, zu den Farbsalzen der Formel (IV) kondensiert und diese ohne Zwischenisolierung nacheinander mit den Basen (V) und den Verbindungen (VII), wie vorstehend beschrieben, umsetzt.

Als Kondensationsmittel werden dabei vorzugsweise Phosphoroxychlorid und/oder Diphosphorpentoxid

eingesetzt.

Die erhaltenen Verbindungen der Formel (I) können ohne weitere Reinigung in den Handel gebracht und in druckempfindlichen Aufzeichnungsmaterialien, insbesondere in mikroverkapselten Materialien eingesetzt werden.

Die erfindungsgemäßen Farbbildner der Formel (I) sind normalerweise farblos oder höchstens schwach gefärbt und zeigen eine sehr hohe Löslichkeit in den für die Verkapselung üblichen (Chlor) Kohlenwasserstoffen, Phthalsäureestern oder auch in pflanzlichen Ölen.

Sie ergeben bei Kontakt mit einem sauren Entwickler, d.h. einem Elektronenakzeptor, intensive blaue, grünblaue, grüne, violette oder rote Farbtöne, die ausgezeichnet sublimations- und lichtecht sind. Durch Mischungen untereinander lassen sich marineblaue, graue oder schwarze Färbungen erzielen.

Sie sind auch wertvoll im Gemisch mit einem oder mehreren anderen bekannten Farbbildnern, z.B. 3,3-Bis-(aminophenyl)-phthaliden, 3,3-Bis-(indolyl)-phthaliden, 3-Amino-fluoranen, 2,6-Diamino-fluoranen, Leukoauraminen, Spiropyranen, Spirodipyranen, Chromeno indolen, Phenoxazinen, Phenothiazinen, Carbazolylmethanen oder anderen Triarylmethanleukofarbstoffen, um grüne, violette, blaue, marineblaue, graue oder schwarze Färbungen zu ergeben.

Sie zeigen sowohl auf phenolischen Unterlagen als auch auf Salicylat und aktivierten Tonen eine hohe Farbintensität, eine herausragende Lichtechtheit und ausgezeichnete Alterungs- und CB-Stabilität. Sie eignen sich für druckempfindliches Aufzeichnungsmaterial, das sowohl Kopier- als auch Registriermaterial sein kann. Ihre Entwicklungsgeschwindigkeit ist in Abhängigkeit von den Substituenten unterschiedlich. Im allgemeinen zeichnen sie sich jedoch durch eine hohe Entwicklungsgeschwindigkeit aus, bei gleichzeitig reduzierter Empfindlichkeit der Aufzeichnungsmaterialien gegenüber unbeabsichtigter vorzeitiger Entwicklung.

Die Farbbildner der Formel (I) zeigen außerdem ein besonders vorteilhaftes Migrationsverhalten, hinsichtlich minimalster Diffusion durch das Kapselmaterial der Mikrokapseln.

Durch Substitution mit langkettigen Alkylresten wird die Löslichkeit der Farbbildner so weit erhöht, daß sich auch von den weniger löslichen Verbindungen hochkonzentrierte Lösungen in den zur Mikroverkapselung geeigneten Lösungsmitteln herstellen lassen.

Druckempfindliche Aufzeichnungsmaterialien sind beispielsweise aus den US-Patentschriften 2 800 457 und 2 800 458 bekannt.

Farbbildner der Formel I, worin
$Y^1$ Alkyl, Aryl, Cycloalkyl oder Aralkyl und
$Y^2$ Aryl bedeuten und
$R^1$, $R^2$, $X^1$, $X^2$, A, B, und C die oben genannte Bedeutung haben,
sind neu und ebenfalls Gegenstand der vorliegenden Erfindung.

Unter diesen Verbindungen sind bevorzugt die Farbbildner der Formel II, worin
$Y^3$ ggf. durch Chlor, Cyano, $C_1$-$C_4$-Alkoxycarbonyl oder $C_1$-$C_4$-Alkoxy substituiertes $C_1$-$C_{12}$-Alkyl, Cyclohexyl, Phenyl oder Benzyl, die durch Chlor, $C_1$-$C_{12}$-Alkyl oder $C_1$-$C_{12}$-Alkoxy substituiert sein können,
$Y^4$ ggf. durch Chlor, $C_1$-$C_{12}$-Alkyl oder $C_1$-$C_{12}$-Alkoxy substituiertes Phenyl bedeuten und die übrigen Reste die oben genannte Bedeutung haben.

Besonders bevorzugt unter diesen Verbindungen sind die Farbbildner der Formel III, worin $Y^5$ für ggf. durch Chlor, Cyano oder $C_1$-$C_4$-Alkoxy substituiertes $C_1$-$C_4$-Alkyl, Phenyl oder Benzyl,
$Y^6$ für ggf. durch Chlor, Cyano oder $C_1$-$C_4$-Alkoxy substituiertes Phenyl stehen und
die übrigen Reste die oben genannte Bedeutung haben.

Beispiel 1

Zu einer Lösung von 15,9 g (0,065 mol) 4,4'-Dimethoxybenzophenon, 98,5%ig in 48,3 g (0,32 mol) Phosphoroxychlorid werden portionsweise 14,2 g (0,1 mol) Phosphorpentoxid hinzugefügt. Zu dieser Mischung werden bei Raumtemperatur innerhalb von 20 min schließlich 12 g (0,065 mol) N-Methyldiphenylamin zugetropft. Es wird auf 50 °C erwärmt und 5 h bei dieser Temperatur verrührt. Unter gutem Rühren wird die auf 20-25 °C abgekühlte Schmelze langsam auf 500 ml Wasser und 150 ml Toluol ausgetragen, so daß die Temperatur 40 °C nicht übersteigt. Mit 240 g (1,8 mol) 30%iger Natronlauge wird durch langsames Hinzufügen ein pH-Wert zwischen 8,5 und 9 eingestellt. Die Mischung wird 4 h bei 40 °C verrührt. Danach wird die sich oben absetzende organische Phase abgetrennt, 4,4 g (0.065 mol) Imidazol und 5 Tropfen Essigsäure hinzugefügt. Diese Lösung wird zum Rückfluß erhitzt, und während 20 h wird das Reaktionswasser am Wasserauskreiser azeotrop entfernt. Schließlich wird das Lösungsmittel im Wasserstrahlvakuum bei ca. 18- 20 mbar und bis zu einer Temperatur von 60 °C entfernt. Auf diese Weise erhält

man 21,2 g (68,6 % d.Theorie) blaßrosafarbene Kristalle vom Schmp. 158-60 °C und der Formel:

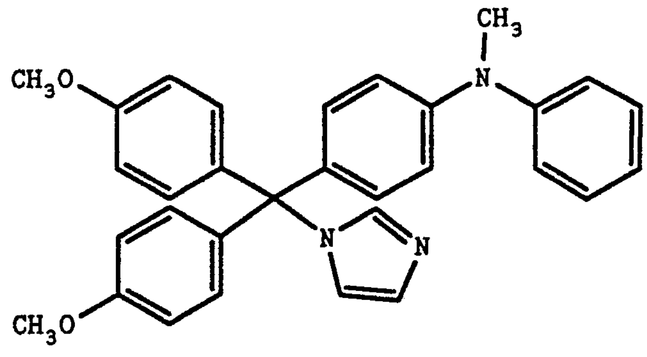

1

Durch Umlösen aus Di-sec.-butylether erhält man 16 g farblose Kristalle vom Schmp.: 164-67 °C

| $C_{31}H_{29}N_3O_2$ (475,6) | % C | % H | % N |
|---|---|---|---|
| Ber.: | 78,3 | 6,15 | 8,83 |
| Gef.: | 78,0 | 6,4 | 8,8 |

Eine Lösung in Eisessig wird rotviolett mit $\lambda_{max}$ = 556 nm und $\lambda_2$ = 430 nm. Die Substanz läßt sich leicht, auch in höheren Konzentrationen, in Di-isopropylnaphthalin, Chlorparaffin ($C_{12}$-$C_{18}$-n-Paraffin mit ca. 45% Chlor), Sesamöl oder Leinöl lösen.

Auf Säureton, Bisphenol A und Salicylat erhält man kräftige rotviolette Farbtöne mit hohen CF- und CB-Lichtechtheiten sowie geringer Rohpapierverfärbung.

Der Farbbildner zeigt außerdem, eingearbeitet in Mikrokapseln, deren Hüllen aus Polyadditionsprodukten von Polyisocyanaten und Polyaminen bestehen, bei höheren Temperaturen keine merkliche Migration, was besonders vorteilhaft ist.

Verfährt man wie im obigen Beispiel beschrieben, fügt jedoch nach der Umsetzung zur Carbinolbase statt Imidazol entsprechende nucleophile Verbindungen der Formel (VII) hinzu und arbeitet, wie beschrieben, weiter auf, so erhält man mit Ausbeuten zwischen 70 und 85 % der Theorie, die folgenden Farbbildner, die alle nur geringe Rohpapierverfärbung zeigen und gutes Migrationsverhalten aufweisen.

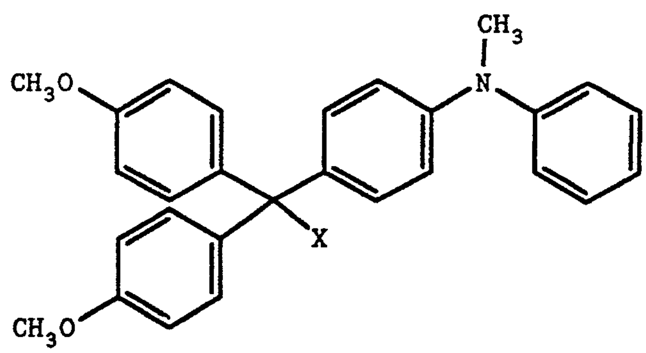

| Beisp. | X | Schmp. (°C) (umgel. aus) | Analytische Daten |
|---|---|---|---|
| 2 | 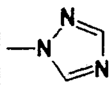 | 125-130 (Methylcyclo-hexan) | $C_{30}H_{28}N_4O_2$ (476,6)<br>Ber.: 75,6% C, 5,92% H, 11,76% N<br>Gef.: 75,4% C, 6,0 % H, 11,5 % N |
| 3 | 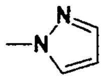 | 25-30 (Harz) | $C_{31}H_{29}N_3O_2$ (475,6)<br>MS: m/e = 475 (25 %) $M^+$ |
| 4 | 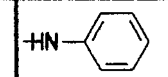 | 185-186 (Methanol) | $C_{34}H_{32}N_2O_2$ (500,6)<br>Ber.: 81,57% C, 6,44% H, 5,60% N<br>Gef.: 80.9 % C, 6,6 % H, 5,4 % N |
| 5 | 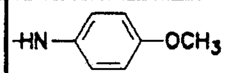 | 66-68 (Isopro-panol) | $C_{35}H_{34}N_2O_3$ (530,6)<br>Ber.: 79,2 % C, 6,46% H, 5,28% N<br>Gef.: 78,6 % C, 6,5 % H, 5,1 % N |
| 6 | 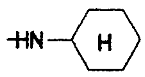 | Harz | $C_{34}H_{38}N_2O_2$ (506,7)<br>MS: m/e = 506 (28 %) $M^+$<br>475 (3,6%) $M^+$-$OCH_3$<br>408 (100%) $M^+$-NH-$C_6H_{11}$ |
| 7 | 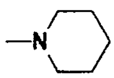 | 42-47 | $C_{33}H_{36}N_2O_2$ (492,6)<br>MS: m/e = 492 (2 %) $M^+$<br>461 (8,6%) $M^+$-$OCH_3$<br>408 (100%) $M^+$ - 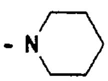 |
| 8 | 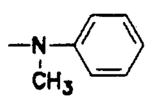 | Harz | $C_{35}H_{34}N_2O_2$ (514,7)<br>MS: m/e = 514 (2 %) $M^+$<br>484 (16%) $M^+$- 2 $CH_3$<br>468 (23%) $M^+$-$OCH_3$ -$CH_3$<br>408 (100%) $M^+$- 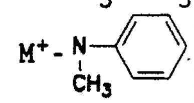 |

| Beisp. | X | Schmp. (°C) (umgel. aus) | Analytische Daten |
|---|---|---|---|
| 9 | 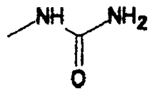 | 65-67 (Methylcyclohexan) | $C_{29}H_{29}N_3O_3$ (467,6)<br>MS: m/e = 467 (3 %) $M^+$<br>450 (34%) $M^+$-$NH_3$<br>408 (100%) $M^+$- 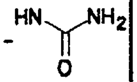 |
| 10 | 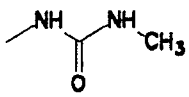 | 176-178 (Toluol) | $C_{30}H_{31}N_3O_3$ (481,6)<br>MS: m/e = 481 (11,3%) $M^+$<br>450 (3,6 %) $M^+$-$OCH_3$<br>408 (100 %) $M^+$- 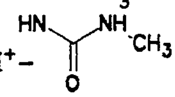 |
| 11 | 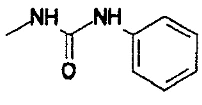 | 79-83 | $C_{35}H_{33}N_3O_3$ (543,7)<br>MS: m/e = 543 (15,6 %) $M^+$<br>512 (9,6 %) $M^+$-$OCH_3$<br>408 (100 %) $M^+$- 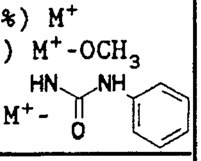 |
| 12 | 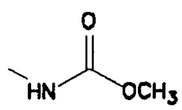 | Harz | $C_{30}H_{30}N_2O_4$ (482,6)<br>MS: m/e = 482 (5,3%) $M^+$<br>451 (23 %) $M^+$-$OCH_3$<br>408 (100 %) $M^+$- 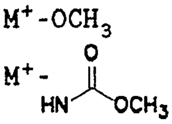 |
| 13 | 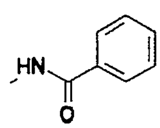 | Harz | $C_{35}H_{32}N_2O_3$ (528,6)<br>MS: m/e = 528 (30 %) $M^+$<br>497 (7,3%) $M^+$-$OCH_3$<br>408 (100 %) $M^+$- 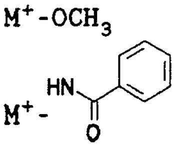 |

Beispiel 14

17,3 g (0,05 mol) Malachitgrün-Base, 3,4 g (0,05 mol) Imidazol und wenige Tropfen Essigsäure werden in 200 ml Toluol 20 h am Wasserabscheider refluxiert. Danach wird das Lösungsmittel im Wasserstrahlvakuum entfernt. Der Rückstand wird kurz mit 100 ml Di-iso-propylether zum Rückfluß erhitzt und abgekühlt. Absaugen und Trocknen im Vakuum bei 30 °C liefert 15,4 g (77,7 % d. Theorie) hellgraues Kristallpulver vom Schmp. 159-65 °C und der Formel

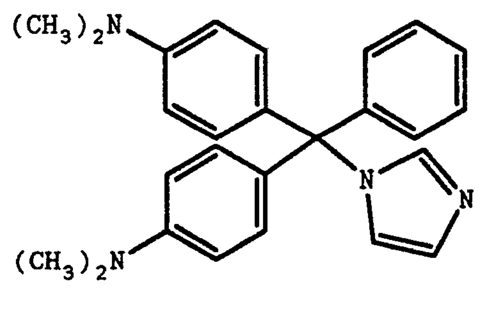

14

Durch Umlösen aus Di-sec.-butylether erhält man fast farblose Kristalle vom Schmp. 168-71 °C. $C_{26}H_{28}N_4$ - (396,5)

| | % C | % H | % N |
|---|---|---|---|
| Ber.: | 78,75 | 7,12 | 14,13 |
| Gef.: | 78,6 | 7,1 | 13,6 |

Auf Säureton erhält man eine kräftige grüne Farbe mit nur geringer Rohpapierverfärbung.

Beispiel 15

In der gleichen Weise ,wie im obigen Beispiel beschrieben, erhält man den Farbbildner der Formel

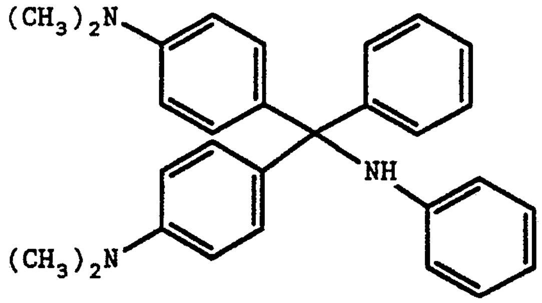

15,

wenn man statt Imidazol die entsprechende Menge Anilin verwendet. Schmp.: 176-78 °C (aus Methylcyclohexan) $C_{29}H_{31}N_3$ (421,6)

| | % C | % H | % N |
|---|---|---|---|
| Ber.: | 82,62 | 7,41 | 9,97 |
| Gef.: | 82,5 | 7,2 | 9,8 |

Beispiel 16

16 g (0.04 mol) Kristallviolett-Carbinolbase, 4,85 g (0.04 mol) Benzamid und 3 Tropfen Essigsäure werden in 150 ml Toluol 18 h am Wasserabscheider refluxiert. Danach wird das Lösungsmittel im Wasserstrahlvakuum entfernt und der verbleibende harzige Rückstand in 250 ml Di-sec.-butylether kurz aufgekocht. Hach Abkühlen auf Raumtemperatur wird abgesaugt und getrocknet. Man erhält 13,4 g (68 % d. Theorie) graue Kristalle vom Schmp. 148-151 °C und der Formel

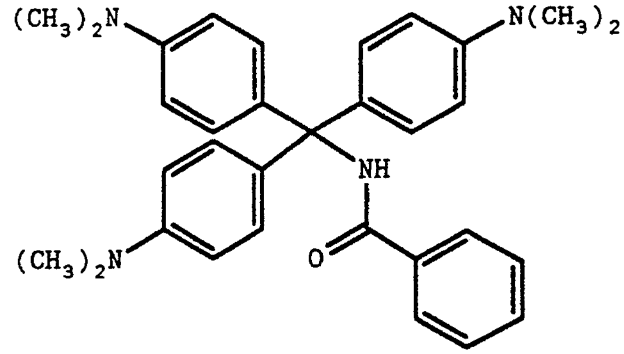

16,

$C_{32}H_{36}N_4O$ (492,7)
MS: m/e = 492 (6 %) $M^+$, 372 (71 %) $M^+$ -

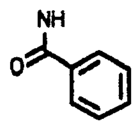

Auf Säureton und Bisphenol A werden kräftige blaue Farbtöne erhalten.

Beispiel 17

Zur Suspension von 23,7 g (0,13 mol) Benzophenon und 36 g (0,25 mol) Phosphorpentoxid 98,5%ig in 96,9 g (0,63 mol) Phosphoroxychlorid werden bei Raumtemperatur langsam 27,9 g (0,13 mol) 1-Ethyl-2,2,4-trimethyl-1,2,3,4-tetrahydrochinolin zugetropft. Die Reaktionsmischung wird auf 90 °C erwärmt und 20 h bei dieser Temperatur verrührt. Die abgekühlte Schmelze wird auf 700 ml Eiswasser ausgetragen, 30 min nachgerührt und 200 ml Toluol hinzugefügt. Bei 40 °C werden innerhalb 1 h 480 g (3,6 mol) 30%ige Natronlauge zugetropft. Es wird 10 h bei 40 °C nachgerührt und die organische Phase abgetrennt. Zur Lösung fügt man 12,1 g (0,13 mol) Anilin und 3 Tropfen Essigsäure hinzu und entfernt das entstehende Reaktionswasser während 18 h unter Rückfluß am Wasserabscheider. Danach wird das Lösungsmittel entfernt, der verbleibende Rückstand kurz in 100 ml Methanol verrührt und getrocknet. Ausbeute: 45,3 g (75,6 % d. Theorie) graue Kristalle vom Schmp. 162-66 °C und der Formel:

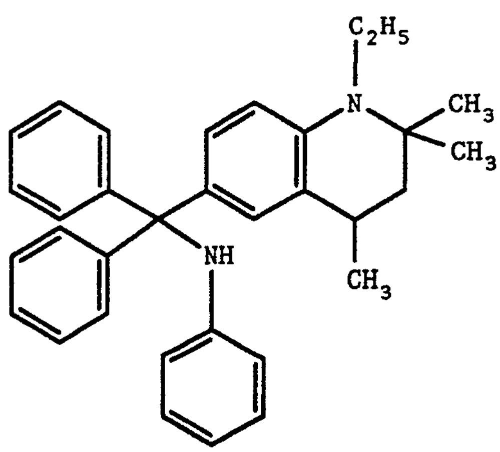

17

Eine Lösung in Eisessig wird orange mit $\lambda_{max}$ = 468 nm und $\lambda_2$ = 340 nm. Auf Säureton, Salicylat und Bisphenol A erhält man kräftige orange Farbtöne mit sehr guten Echtheiten.

Beispiel 18

30,8 g (0,1 mol) 4-(H-Methyl-phenyl)-benzophenon, 89,6%ig und 19 g (0,14 mol) Phosphorpentoxid werden in 74,3 g (0,48 Mol) Phosphoroxychlorid suspendiert und bei Raumtemperatur langsam mit 18,5 g (0,1 mol) H-Methyl-diphenylamin versetzt. Die Reaktionsmischung wird 15 h bei 50°C verrührt und nach dem Abkühlen auf 500 ml Eiswasser ausgetragen, so daß die Temperatur 50°C nicht über-steigt. Man gibt 200 ml Toluol zu und tropft innerhalb 1 h zur Mischung 335 g (2,5 mol) 30%ige Natronlauge. Die Mischung wird 2 h bei 50 °C verrührt. Man trennt die organische Phase ab und fügt 12,1 g (0,1 mol) 4-Ethyl-anilin und 3 Tropfen Essigsäure hinzu. Es wird zum Rückfluß erhitzt, und während 18 h wird das Reaktionswasser am Wasserauskreiser azeotrop entfernt. Hach vollständiger Umsetzung wird das Lösungsmittel im Wasserstrahlvakuum entfernt. Zum Rückstand gibt man 200 ml Isopropanol und kocht kurz auf. Abfiltrieren und Trocknen im Vakuum bei 30°C liefert 42,5 g (74 % d. Theorie) hellbeiges Kristallpulver vom Schmp. 48-53°C und der Formel:

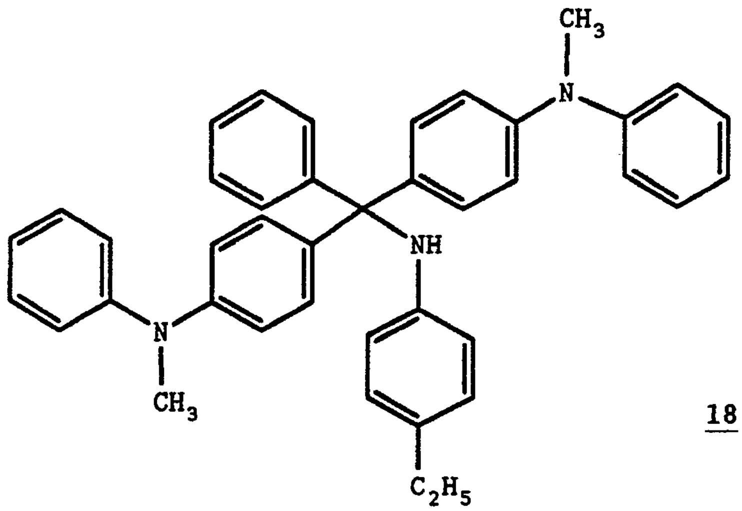

18

Eine Lösung in Eisessig zeigt eine kräftige grüne Farbe mit $\lambda_{max}$= 626 nm und $\lambda_2$ = 423 nm.

Beispiel 19

22,34 g (0,07 mol) 9-Ethyl-3-benzoyl-carbazol, 93,8%ig, und 14,4 g (0,1 mol) Phosphorpentoxid, 98%ig, werden in 52,6 g (0,34 mol) Phosphoroxychlorid suspendiert und langsam mit 12,9 g (0,07 mol) N-Methyl-diphenylamin versetzt. Die Reaktionsmischung wird 12 h bei 50°C verrührt und nach dem Abkühlen so auf 200 ml Eiswasser ausgetragen, daß die Temperatur 50°C nicht übersteigt. Man gibt 150 ml Toluol zu und tropft innerhalb 1 h 200 ml 50%ige Natronlauge zu. Die Mischung wird 6 h bei 50 °C verrührt. Man trennt die organische Phase ab, fügt 4,83 g (0,07 mol) 1,2,4-Triazol und 5 Tropfen Essigsäure hinzu. Diese Lösung wird zum Rückfluß erhitzt und das entstehende Wasser azeotrop am Wasserabscheider während 18 h entfernt. Schließlich wird das Lösungsmittel im Wasserstrahlvakuum entfernt. Trocknen des Rückstandes liefert 25,5 g (68,3 % d. Theorie) schwach gelblich gefärbte Kristalle vom Schmp. 69-74°C und der Formel:

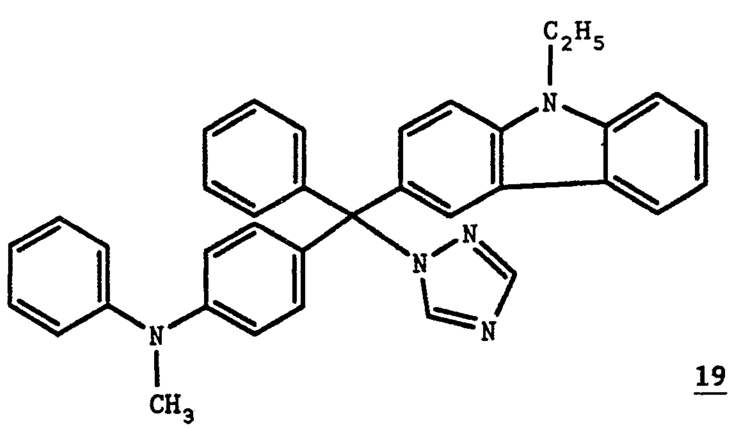

19

Umlösen aus Methylcylohexan liefert hellgelbe Kristalle vom Schmp. 79-81 °C. Eine Lösung in Eisessig wird grün mit $\lambda_{max}$ = 610 nm und $\lambda_2$ = 428 nm.
$C_{36}H_{31}N_5$ (533,7)
MS: m/e = 533 (20,5 %) $M^+$, 405 (100 %) $M^+$-

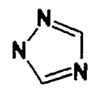

Analog den Beispielen 14 bis 19 werden auch die folgenden Farbbildner hergestellt:

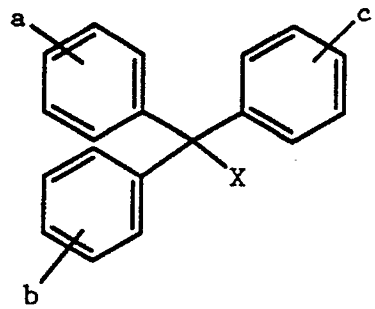

| Beisp. | a | b | c | X | Farbton auf Säureton oder Bisphenol A |
|---|---|---|---|---|---|
| 20 | 4-$OCH_3$ 2-$OCH_3$ | 4-$OCH_3$ | 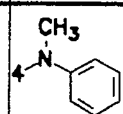 | 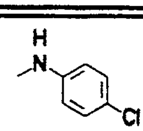 | rotviolett |
| 21 | 4-$OCH_3$ 2-$OCH_3$ | 3-$OCH_3$ | 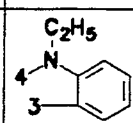 | 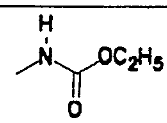 | blauviolett |
| 22 | 4-$OC_4H_9$ | 4-$OCH_3$ 3-$C_3H_7$-i 5-$C_3H_7$-i | 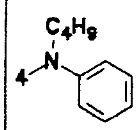 | 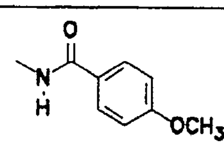 | dunkelviolett |
| 23 | 4-$OC_6H_5$ | 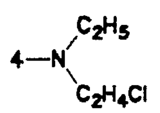 | 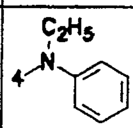 | 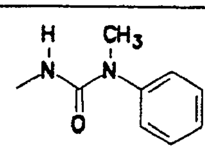 | grün |
| 24 | 2-Cl | 4-$N(C_2H_5)_2$ | 4-$N(C_2H_5)_2$ 2-$OC_2H_5$ | 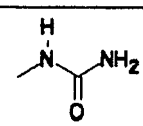 | blaugrün |
| 25 | 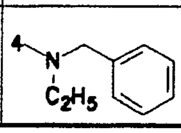 | 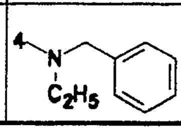 | 4-$OC_4H_9$ 2-$C_4H_9$ | 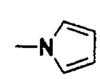 | dunkelgrün |

| Beisp. | a | b | c | X | Farbton auf Säureton oder Bisphenol A |
|---|---|---|---|---|---|
| 26 | H | 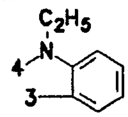 | 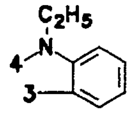 | 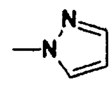 | blaugrün |
| 27 | 2-Cl | 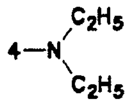 | 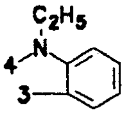 | 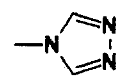 | blau |
| 28 | 4-Cl<br>2-$CH_3$ | 4-$N(C_4H_9)_2$<br>2-$OCH_3$ | 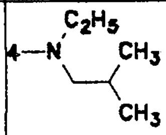 | 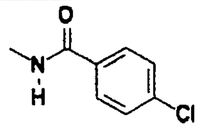 | stumpfes Grün |
| 29 | H | 4-$N(CH_3)_2$<br>2-$N(CH_3)_2$ | 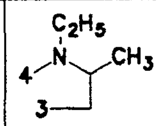 | 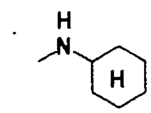 | grün |
| 30 | 4-$OC_2H_5$ | 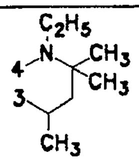 | 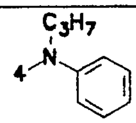 | 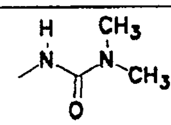 | dunkelgrün |
| 31 | 4-$N(C_2H_5)_2$ | 4-$N(C_2H_5)_2$ | 4-$N(C_2H_5)_2$ | 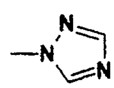 | blau |
| 32 | 4-$C_{12}H_{25}$<br>2-$CH_3$ | 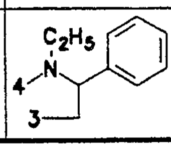 | 4-$N(CH_3)_2$<br>3-$CH_3$<br>5-$CH_3$ | 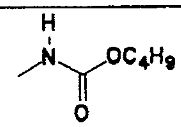 | stumpfes Grün |

Beispiel 33

5 g Farbbildner des Beispiels 1 werden in einem Gemisch aus 60 g Dodecylbenzol und 40 g Chlorparaffin mit 45 % Cl-Gehalt gelöst. 223 g einer solchen Lösung werden mit 39,5 g Oxadiazintrion von Desmodur H (NCO-Gehalt 20,5 %) vermischt. Anschließend erfolgt die Vermischung mit 320 g 0,5%iger Polyvinylalkohollösung und die Emulgierung im Schergefälle eines Rotor/Stator-Emulgiergerätes. Die Vernetzung erfolgt mit 76 g 9,0%iger Diethylentriaminlösung. Die Nachbehandlung erfolgt durch Erwärmen der Dispersion auf 60° C und dreistündiges Rühren bei 60° C. Es wird dabei eine 40 % Kapseln enthaltende Dispersion der Kapselgröße 7,3 µm erhalten.

250 ml dieser Dispersion werden vorgelegt und unter intensivem Rühren 40 g Cellulosefeinschliff (Arbocell BE 600/30 der Fa. Rettenmeier & Söhne) langsam eingestreut. Nach mindestens 30minütigem intensiven Rühren erfolgt die Zugabe von 40 ml 50%iger SBR-Latex (Baystal P 1600 der Fa. Bayer AG). Die resultierende 48,5%ige Streichfarbe wird mit Wasser auf 30 % Feststoffgehalt verdünnt und mit einer Luftbürste auf die Rückseite eines handelsüblichen Basis-Papiers gestrichen. Der Auftrag beträgt nach dem Trocknen 5 g/m². Das so bestrichene Papier wird mit der beschichteten Seite auf die mit Entwicklersubstanz beschichtete Seite eines handelsüblichen kohlefreien Durchschreibepapiers gelegt. Bei Ausführung eines Schreibdruckes auf das mit Kapseln beschichtete Papier ergibt sich auf dem Durchschreibepapier eine rotviolette Durchschrift, die sehr lichtecht ist.

Beispiel 34

Verwendet man 5 g Farbbildner des Beispiels 7 und arbeitet analog Beispiel 33, so erhält man ein mit Mikrokapseln beschichtetes Papier, das in analoger Weise eine kräftige, grüne Durchschrift ergibt, die

ebenfalls sehr lichtecht ist.

**Ansprüche**

1. Farbbildner der allgemeinen Formel

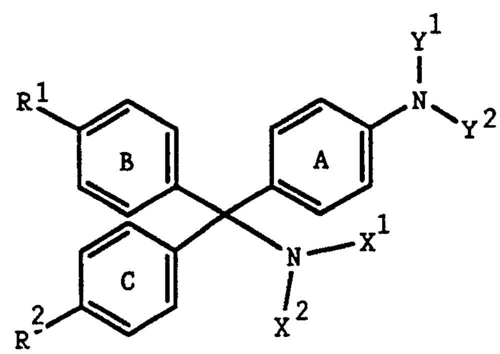

worin - unabhängig voneinander -
$R^1$ und $R^2$ Wasserstoff, Halogen, Alkyl, Aralkyl, Alkoxy, Aralkoxy, Aryloxy, oder einen Rest der Formel

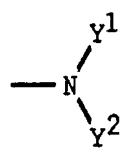

$Y^1$ und $Y^2$ Alkyl, Aryl, Cycloalkyl oder Aralkyl,
$X^1$ Alkyl, Alkenyl, Cycloalkyl, Aralkyl, Aryl, Acyl, Arylcarbonyl, Arylsulfonyl, Carbamoyl, N-Alkylcarbamoyl, N,N-Dialkylcarbamoyl, N-Arylcarbamoyl, N-Alkyl-N-arylcarbamoyl, Sulfamoyl, N-Alkylsulfamoyl, N,N-Dialkyl-sulfamoyl, N-Arylsulfamoyl oder N-Alkyl-N-arylsulfamoyl,
$X^2$ Wasserstoff, Alkyl, Alkenyl, Cycloalkyl, Aralkyl oder Aryl bedeuten, oder
$X^1$ mit $X^2$ unter Einschluß des sie tragenden Stickstoffatoms einen gesättigten bzw. ungesättigten 5- bzw. 6-gliedrigen heterocyclischen Ring bilden können, und
den Ringen A, B und C weitere isocyclische oder heterocyclische Ringe anelliert werden können, und die cyclischen und acyclischen Reste sowie die Ringe A, B und C weitere in der Farbstoffchemie übliche, nichtionische Substituenten tragen können.

2. Farbbildner gemäß Anspruch 1 der Formel

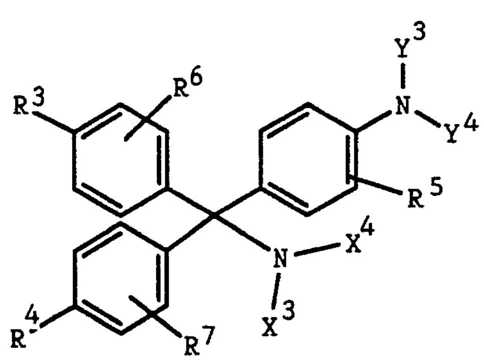

worin - unabhängig voneinander -
$R^3$ und $R^4$ Wasserstoff, Chlor, ggf. durch Chlor oder $C_1$-$C_4$-Alkoxy substituiertes $C_1$-$C_{12}$-Alkyl, ggf. durch Chlor oder $C_1$-$C_4$-Alkoxy substituiertes $C_1$-$C_{12}$-Alkoxy, Benzyl, Phenoxy oder einen Rest der Formel

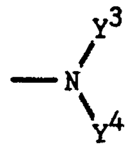

$R^5$, $R^6$, $R^7$ Wasserstoff, Chlor, $C_1$-$C_{12}$-Alkyl, $C_1$-$C_{12}$-Alkoxy, Phenoxy, Benzyloxy oder einen Rest der Formel

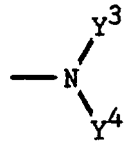

$Y^3$ und $Y^4$ ggf. durch Chlor, Cyano, $C_1$-$C_4$-Alkoxycarbonyl oder $C_1$-$C_4$-Alkoxy substituiertes $C_1$-$C_{12}$-Alkyl, Cyclohexyl, Phenyl oder Benzyl, die durch Chlor, $C_1$-$C_{12}$-Alkyl oder $C_1$-$C_{12}$-Alkoxy substituiert sein können,

$X^3$ $C_1$-$C_{12}$-Alkyl, Cyclohexyl, ggf. durch Chlor, $C_1$-$C_4$-Alkyl oder $C_1$-$C_4$-Alkoxy substituiertes Benzyl oder Phenyl, $C_1$-$C_4$-Alkylcarbonyl, $C_1$-$C_4$-Alkylsulfonyl, $C_1$-$C_4$-Alkoxycarbonyl, ggf. durch Chlor, $C_1$-$C_4$-Alkyl oder $C_1$-$C_4$-Alkoxy substituiertes Phenylcarbonyl oder Phenylsulfonyl, Carbamoyl, H-$C_1$-$C_4$-Alkylcarbamoyl, N,N-Di-$C_1$-$C_4$-Alkylcarbamoyl, ggf. durch Chlor, $C_1$-$C_4$-Alkyl oder $C_1$-$C_4$-Alkoxy substituiertes N-Phenylcarbamoyl oder N-$C_1$-$C_4$-Alkyl-N-phenyl-carbamoyl, Sulfamoyl, N-$C_1$-$C_4$-Alkylsulfamoyl, N,N-Di-$C_1$-$C_4$-alkyl-sulfamoyl oder ggf. durch Chlor, $C_1$-$C_4$-Alkyl oder $C_1$-$C_4$-Alkoxy substituiertes N-Phenylsulfamoyl

$X^4$ Wasserstoff bedeuten, oder

$X^3$ mit $X^4$ unter Einschluß des sie tragenden Stickstoffatoms einen heterocyclischen Ring der folgenden Formeln

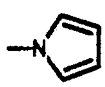 , 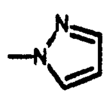 , 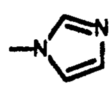 , 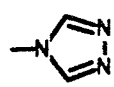 ,

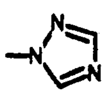 , 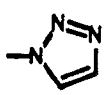 , 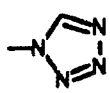 , 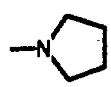 , 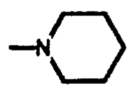 ,

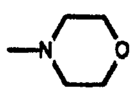

bilden können, wobei der heterocyclische Ringteil 1 bis 3 Reste aus der Gruppe Chlor, $C_1$-$C_4$-Alkyl oder Phenyl tragen kann, und

$R^3$ mit $R^6$, $R^4$ mit $R^7$ unter Einschluß des sie tragenden Benzolringes ein Ringsystem der Formeln

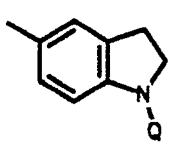 , 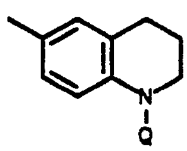 ,

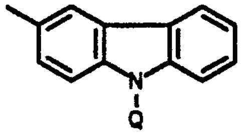

oder

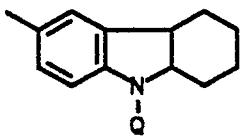

bilden können, wobei

Q für $C_1$-$C_{12}$-Alkyl, das durch Chlor, Cyano, $C_1$-$C_4$-Alkoxycarbonyl oder $C_1$-$C_4$-Alkoxy substituiert sein kann, Cyclohexyl, Phenyl oder Benzyl, die durch Chlor, $C_1$-$C_{12}$-Alkyl oder $C_1$-$C_{12}$-Alkoxy substituiert sein können, steht, und der gesättigte Ringteil bis zu vier Reste aus der Gruppe Chlor, $C_1$-$C_4$-Alkyl, $C_1$-$C_4$-Alkoxy oder Phenyl tragen kann, oder

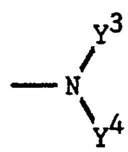

einen gegebenfalls durch Chlor, $C_1$-$C_4$-Alkyl oder Phenyl substituierten Pyrrolo-, Pyrrolidino-, Piperidino-, Pipecolino-, Morpholino-, Pyrazolo- oder Pyrazolinrest bedeutet.

3. Farbbildner der Formel

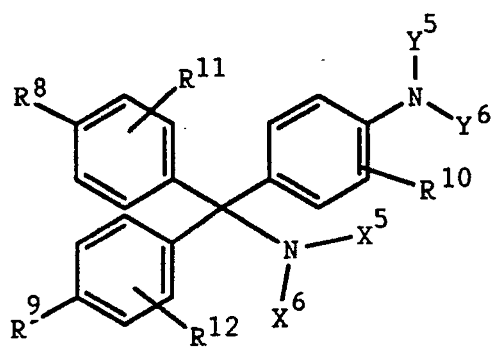

worin - unabhängig voneinander -

$R^8$ und $R^9$ Wasserstoff, Chlor, $C_1$-$C_{12}$-Alkyl, $C_1$-$C_{12}$-Alkoxy, Phenoxy oder einen Rest der Formel

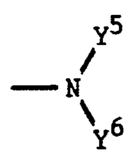

$R^{10}$,$R^{11}$,$R^{12}$ Wasserstoff, Chlor, Methyl, Ethyl, Propyl, Butyl, Methoxy, Ethoxy, Dimethylamino oder Diethylamino

$Y^5$ und $Y^6$ ggf. durch Chlor, Cyano oder $C_1$-$C_4$-Alkoxy substituiertes $C_1$-$C_4$-Alkyl, Phenyl oder Benzyl,

$X^5$ Cyclohexyl, ggf. durch Chlor, Methyl, Ethyl, Methoxy oder Ethoxy substituiertes Phenyl, $C_1$-$C_4$-Alkoxycarbonyl, ggf. durch Chlor, Methyl, Ethyl, Methoxy oder Ethoxy substituiertes Phenylcarbonyl, Carbamoyl, N-$C_1$-$C_4$-Alkylcarbamoyl, N,N-Di-$C_1$-$C_4$-alkylcarbamoyl, ggf. durch Chlor, Methyl, Ethyl, Methoxy oder Ethoxy substituiertes N-Phenylcarbamoyl oder N-$C_1$-$C_4$-Alkyl-N-aryl-carbamoyl,

$X^6$ Wasserstoff bedeuten, oder

$X^5$ mit $X^6$ unter Einschluß des sie tragenden Stickstoffatoms einen heterocyclischen Ring

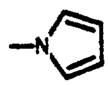 , 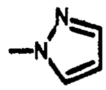 , 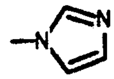 ,

der Formeln

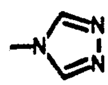 , 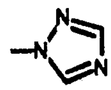

bilden können,
$R^8$ mit $R^{11}$, $R^9$ mit $R^{12}$ unter Einschluß des sie tragenden Benzolringes ein Ringsystem

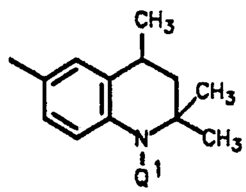 ,

der Formeln

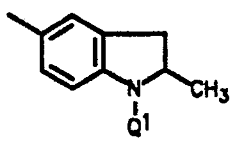 , 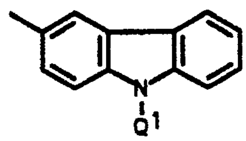

bilden
können, und
$Q^1$ für $C_1$-$C_{12}$-Alkyl steht.

4. Verfahren zur Herstellung von Farbbildner gemäß Anspruch 1, dadurch gekennzeichnet, daß man in einer Eintopfreaktion Ketone der Formel

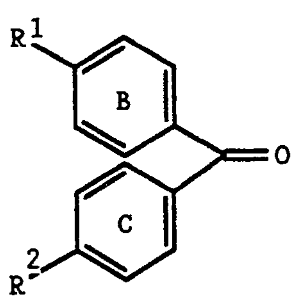

worin
$R^1$, $R^2$, B und C die in Anspruch 1 genannte Bedeutung haben,
mit Aminen der Formel

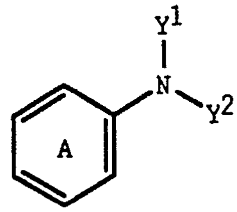

worin
$Y^1$, $Y^2$ und A die in Anspruch 1 genannte Bedeutung haben,
oder Ketone der Formel

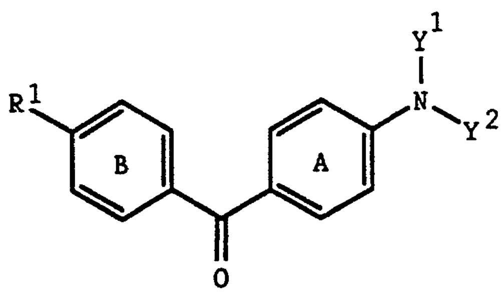

worin
$R^1$, $Y^1$, $Y^2$, A und B die in Anspruch 1 genannte Bedeutung haben,
mit Verbindungen der Formel

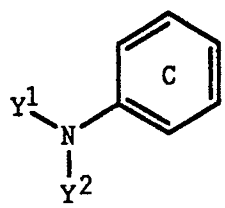

worin
$Y^1$, $Y^2$ und C die in Anspruch 1 genannte Bedeutung haben,
in Gegenwart eines Kondensationsmittels, das ein Anion $An^-$ liefert, zu den Farbsalzen der Formel

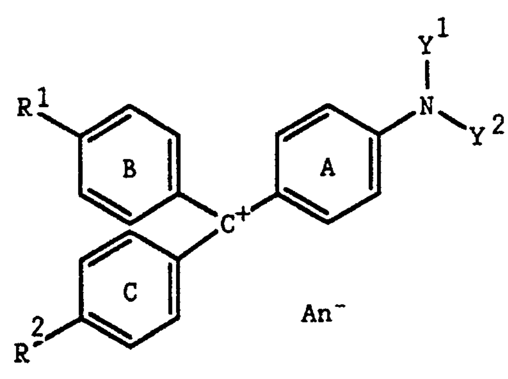

worin
$R^1$, $R^2$, $Y^1$, $Y^2$ und die Ringe A, B und C die in Anspruch 1 genannte Bedeutung haben und
$An^-$ für ein Anion aus der Reihe Chlorid, Bromid, Acetat, Sulfat, Phosphat oder p-Toluolsulfonat steht,
umsetzt und diese ohne Zwischenisolierung nacheinander mit den Basen der Formel MeOH, worin
Me ein Alkali- oder Erdalkalimetall, insbesondere Natrium oder Kalium bedeutet,

sowie Verbindungen der Formel

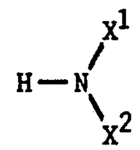

worin
$X^1$ und $X^2$ die in Anspruch 1 genannte Bedeutung haben,
unter Entfernung des Reaktionswassers kondensiert.

5. Verwendung der Farbbildner gemäß Anspruch 1 in druck-, wärme- und elektrosensitivem Aufzeichnungsmaterial.

6. Druck-, wärme- und elektrosensitives Aufzeichnungsmaterial, dadurch gekennzeichnet, daß es in seinem Reaktantensystem mindestens einen Farbbildner gemäß Anspruch 1 enthält.

7. Aufzeichnungsmaterial gemäß Anspruch 6, dadurch gekennzeichnet, daß es außerdem einen anderen üblichen Farbbildner oder Mischungen von Farbbildnern, wie sie bei dem Verfahren gemäß Anspruch 4 erhalten werden, enthält.

8. Verbindungen gemäß Anspruch 1, worin
$Y^1$ Alkyl, Aryl, Cycloalkyl oder Aralkyl,
$Y^2$ Aryl bedeuten und
$R^1$, $R^2$, $X^1$, $X^2$, A, B, und C die in Anspruch 1 genannte Bedeutung haben.

9. Verbindung der Formel:

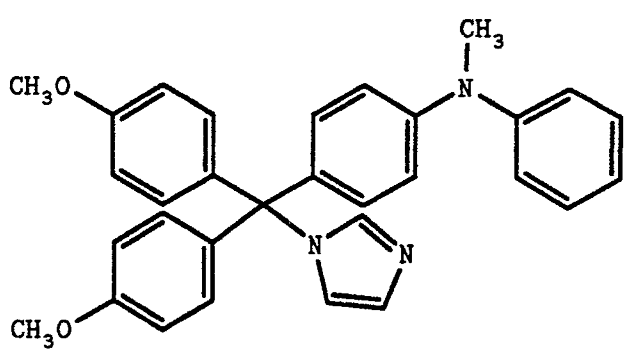

10. Verbindung der Formel: